# EUROPEAN PATENT SPECIFICATION

(11) **EP 2 298 588 B1**
(45) Date of publication and mention of the grant of the patent: **25.06.2014**
(21) Application number: 10177364.6
(22) Date of filing: 17.09.2010
(51) Int. Cl.: B60M 1/06, B60M 5/02

(54) **Reduction of electromagnetic interference of a direct-current rail track**
Reduzierung von elektromagnetischer Beeinflussung auf eine Gleichstromeisenbahn
Réduction d'interférence electro-magnetique sur une voie de chemin de fer courant direct

(30) Priority: 17.09.2009 NL 2003508
(43) Date of publication of application: 23.03.2011
(73) Proprietor: Em Power Systems B.v., 3065 LG Rotterdam (NL)
(72) Inventor: Gravendeel, Bastiaan, 3123 CM, Schiedam (NL); Van Overbeeke, Frank, 3065 LG, Rotterdam (NL)
(74) Representative: Mertens, Hans Victor

(56) References cited:
- DE-U1- 20 313 146
- US-A- 1 368 530
- US-A- 1 481 289
- ALTMANN M ET AL: "SPANNUNGEN UND UEBERSPANNUNGEN IN DER RUECKLEITUNG VON GLEICHSTROMBAHNEN//VOLTAGES AND OVER VOLTAGES IN THE RETURN CIRCUIT OF DC TRACTION SYSTEMS", ELEKTRISCHE BAHNEN, OLDENBOURG INDUSTRIEVERLAG, MUNCHEN, DE, vol. 104, no. 3, 1 March 2006 (2006-03-01) , pages 129-136, XP001540553, ISSN: 0013-5437

## Description

The present invention relates to measures for reducing the electromagnetic interference of a direct-current (DC) rail track. A rail track may comprise one or more tracks. A track comprises two rails, over which rolling stock can drive or be driven. The rails normally rest on sleepers, for example wooden sleepers or sleepers made of concrete. The sleepers are mainly laid in ballast (coarse gravel of special dimensions) on top of an earth track or a body of sand. Constructions wherein the rails are laid on a concrete slab or a civil engineering structure (bridge, viaduct) also occur.

One of the main requirements for electrical rail tracks relates to the electrical contact safety for persons. In the case of a track fed with alternating-current voltage such as 15 kV, 16.7 Hz (as, for example, in Germany) or 25 kV, 50 Hz (for example, the TGV lines in France and the Betuwe route and High Speed Line in the Netherlands), this safety is achieved by connecting the rails firmly to the earth. If current flows through the rails, the connection to the earth ensures that the contact voltages cannot become too high for people who are in the vicinity of the track.

In case of the main track in the Netherlands, which is a direct-current (DC) track (1500 V), a different solution has been chosen. Here, the entire track system has been constructed as electrically floating. No deliberate connection has been established between the rails and the earth at any point. The train safety equipment used in the Netherlands, which is disposed in and on the direct-current track, is based on an electrically floating track. If the track is nevertheless connected to the earth, a fault situation arises immediately in the track section concerned, which is detected by the train safety system. In an unwanted manner, this results in a reduced availability of the track section concerned.

If a source of electromagnetic (EM) fields runs parallel to the DC track, this induces alternating-current voltages in the DC track (system). These voltages may be so high that they exceed the permitted values for the contact voltage, as specified in national and international regulations. In practice, such a situation may arise, for example, if a 25 kV, 50 Hz HSL track runs over many kilometres parallel to a DC track which is at a fairly short distance (in the order of several track widths).

In order to guarantee the contact safety in such a situation, earthing of the tracks would be a correct electrical engineering solution. However, as mentioned, earthing of the DC track is not permitted, so that no solution to the contact safety problem can be obtained in such a manner.

A possible alternative is to earth the track resonantly for the frequency of the induced voltage. If the track is earthed in this manner, this is not disadvantageous for the train safety equipment. In fact, a relatively high current can pass through the rails of the DC track at the frequency of the induced voltage. However, this cannot offer a general solution, for various reasons. In the Netherlands, a resonant earthing is undesirable because there are standard multiple-unit cars which cannot cope with this increased current, as a result of which safety risks arise. In this case, resonant earthing therefore produces an unwanted situation indirectly via the rolling stock.

It is desirable to maintain the contact safety of the DC track at a permitted level in the case of electromagnetic interference of the DC track.

Unearthed direct-current rail tracks and methods for improving their contact safety are known from Altmann et al.:"Spannungen und Oberspannungen in der Ruckleitung von Gleichstrombahnen", ELEKTRISCHE BAHNEN, vol. 104, no. 3, 1 March 2006, pages 129-136, XP001540553, ISSN: 0013-5437 and from document EP 1 39 17 41.

According to a first aspect of the invention, a method is provided for this purpose for improving the contact safety of an unearthed direct-current track, which comprises rails extending over a base. The method comprises providing an electrical conductor in the vicinity of rails, said conductor extending substantially parallel to the rails and not being electrically connected to them, and earthing the conductor.

According to another aspect of the invention, an unearthed direct-current track with improved contact safety is provided, which comprises rails extending over a base. The track comprises an electrical conductor in the vicinity of rails, said conductor extending substantially parallel to the rails and not being electrically connected to them, and an electrical connection between the electrical conductor and the earth.

The invention provides a floating conductor in the vicinity of the DC track which is not electrically connected to the DC track (is therefore isolated from the DC track), but is electrically connected to the earth. Here, the potential difference between the track and the earth is reduced by increasing the earth locally in potential. A source which induces an electromagnetic interference in the DC track also causes currents to flow in the conductor and the earth. The potential difference between this conductor and the earth is thereby reduced. The potential of the earth is thereby increased. The contact voltage for people is thereby reduced and no further safety risk exists. The advantage is that no adaptations need to be made to the source and that no adaptations of the electrical system of the DC track are required either.

The invention is explained in detail below with reference to the attached figures, in which non-limiting exemplary embodiments are shown, wherein:
Figure 1 shows a cross-section of a known direct-current rail track with two tracks;
Figure 2 schematically illustrates a cross-section of a direct-current rail track according to the invention; and
Figure 3 schematically illustrates a cross-section of a direct-current rail track according to another embodiment of the invention.

In the different figures, the same reference numbers relate to similar components or components with a similar function.

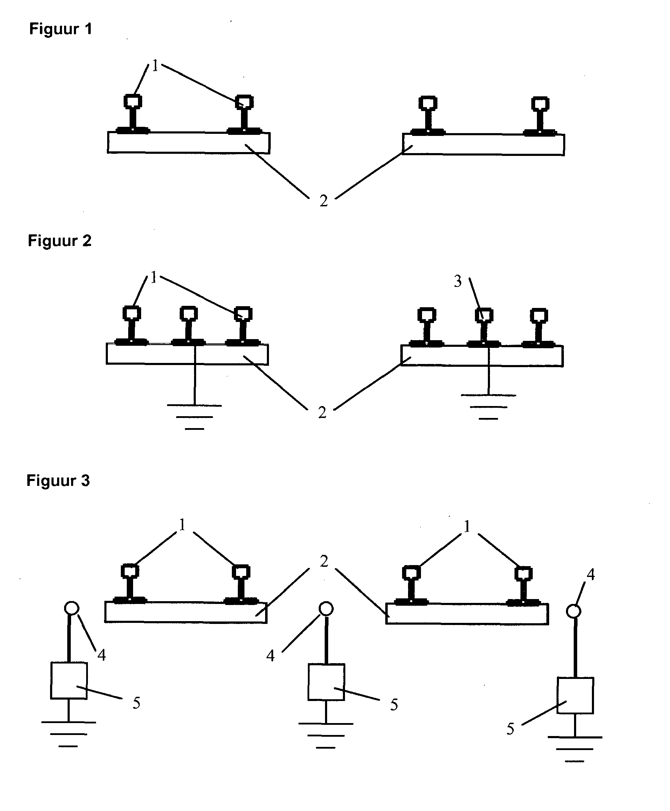

Figure 1 schematically shows a cross-section of a rail track with two tracks of a direct-current rail track. Each track comprises rails 1 and sleepers 2. The sleepers 2 may be laid in ballast (such as coarse gravel with special dimensions) on top of an earth track or a body of sand. The rails 1 may also, for example, be laid on a concrete slab or a civil engineering structure (bridge, viaduct), with or without the interposition of sleepers 2.

Figure 2 illustrates an embodiment of a contact safety track according to the invention. The track comprises an electrical conductor 3 in the form of a rail which substantially extends parallel to the rails 1 of the track, and is disposed centrally between the rails 1 on the sleepers 2. The distance between the conductor 3 and each of the rails 1 is therefore less than the distance between the rails 1 of the track concerned. The conductor 3 is not electrically connected to the rails 1 or to a direct-current power source of the track concerned. The conductor 3 is directly electrically connected to the earth (is therefore earthed). This earthing takes place at regular intervals along the length of the conductor 3.

The use of a rail has the advantage that it can be handled and mounted with devices which are already known in the technical (rail track) field. Rails are in fact also used in this manner as a derailment guide. They are then laid closer to the rails and prevent the further derailment of a derailed train. In the existing application of a derailment guide, a rail used for this purpose is not electrically connected to the other rails of a track or to a direct-current power source of the track, as the function of a rail of this type is purely mechanical. Rails of this type may also form part of the contact safety device according to the invention, by connecting the derailment guide rail electrically to earth.

Figure 3 illustrates the use of conductors 4, for example cables, which are disposed on either side next to the track, preferably at a distance from a rail 1 of the track which is less than the reciprocal distance between the rails 1 of the track. A conductor 4 can also be disposed or buried centrally between the tracks. As shown in Figure 2, the conductor may be connected directly to the earth, but this electrical connection may also comprise one or more electrical components, as symbolized by the block 5. The block 5 comprises, for example, at least a resistor and/or a capacitor and/or a coil and/or a resonant network and/or a filter network of a different type.

The manner of connection of the conductor(s) 3, 4 to the earth can therefore be directly resistive with earthing pins or buried conductors. It is also possible to provide this connection to earth capacitively or via a resonant path. Here, the conductor(s) 3, 4 is/are connected via capacitors, and/or via a resonant circuit, to the earth.

It must be understood that the embodiments described are merely examples of the invention, which may be embodied in a number of different designs. Specific structural and functional details which are disclosed herein must not therefore be regarded as limiting, but solely as a basis for the claims, and as a representative basis in order to provide the person skilled in the art with sufficient information to implement the invention. The terms and phrases which are used herein are not intended to be limiting, but to provide an understandable description of the invention.

The term "a/an" which is used herein is defined as one or more than one. The term "number of" which is used herein is defined as two or more than two. The term "another" which is used herein is defined as at least a second one or more. The terms "connected" and "connection" which are used herein do not necessarily relate to a direct connection, but can also indicate a connection with the intermediate connection of an element.

## Claims

1. Method for improving the contact safety of an unearthed direct-current track which comprises rails extending over a base,
said method being **characterised by**
providing an electrical conductor (3,4) in the vicinity of said rails, said conductor extending substantially parallel to the rails (1) and not being electrically connected to them; and
earthing the conductor (3,4) by providing an electrical connection (5) between the electrical conductor and the earth.

2. Unearthed direct-current track with improved contact safety comprising rails (1) extending over a base,
**characterised by**
an electrical conductor (3,4) in the vicinity of said rails, said conductor (3) extending substantially parallel to the rails (1) and not being electrically connected to them; and an electrical connection (5) between the electrical conductor and the earth.

3. Unearthed direct-current track according to claim 2, wherein the electrical connection (5) comprises a resistor.

4. Unearthed direct-current track according to claim 2, wherein the electrical connection (5) comprises a capacitor.

5. Unearthed direct-current track according to claim 2, wherein the electrical connection (5) comprises a resonant network.

6. Unearthed direct-current track according to any of claims 2-5, wherein the conductor (3) is placed between the rails (1).

7. Unearthed direct-current track according to any of claims 2-5, wherein the conductor (4) is laid next to the track, in particular is embedded in the base.

8. Unearthed direct-current track according to claim 6, wherein the conductor (3) is a rail.

9. Unearthed direct-current track according to claim 6 or 7, wherein the conductor (4) is a cable.

## Patentansprüche

1. Verfahren zur Verbesserung der Kontaktsicherheit eines erdfreien Gleichstrom-Schienengleises, welches Schienen umfasst, die sich über eine Basis erstrecken, **gekennzeichnet durch**
Bereitstellen eines elektrischen Leiters (3, 4) in der Nähe der Schienen, wobei sich der Leiter im Wesentlichen parallel zu den Schienen (1) erstreckt und nicht elektrisch mit ihnen verbunden ist; und
Erden des Leiters (3, 4) **durch** Bereitstellen einer elektrischen Verbindung (5) zwischen dem elektrischen Leiter und der Erde.

2. Erdfreies Gleichstrom-Schienengleis mit verbesserter Kontaktsicherheit, das Schienen (1) umfasst, die sich über eine Basis erstrecken,
**gekennzeichnet durch**
einen elektrischen Leiter (3, 4) in der Nähe der Schienen, wobei sich der Leiter (3) im Wesentlichen parallel zu den Schienen (1) erstreckt und nicht elektrisch mit ihnen verbunden ist; und eine elektrische Verbindung (5) zwischen dem elektrischen Leiter und der Erde.

3. Erdfreies Gleichstrom-Schienengleis nach Anspruch 2, wobei die elektrische Verbindung (5) einen Widerstand umfasst.

4. Erdfreies Gleichstrom-Schienengleis nach Anspruch 2, wobei die elektrische Verbindung (5) einen Kondensator umfasst.

5. Erdfreies Gleichstrom-Schienengleis nach Anspruch 2, wobei die elektrische Verbindung (5) ein resonantes Netzwerk umfasst.

6. Erdfreies Gleichstrom-Schienengleis nach einem der Ansprüche 2 bis 5, wobei der Leiter (3) zwischen den Schienen (1) angeordnet ist.

7. Erdfreies Gleichstrom-Schienengleis nach einem der Ansprüche 2 bis 5, wobei der Leiter (4) neben dem Gleis verlegt ist, und insbesondere in die Basis eingebettet ist.

8. Erdfreies Gleichstrom-Schienengleis nach Anspruch 6, wobei der Leiter (3) eine Schiene ist.

9. Erdfreies Gleichstrom-Schienengleis nach Anspruch 6 oder 7, wobei der Leiter (4) ein Kabel ist.

## Revendications

1. Procédé d'amélioration de la sécurité de contact d'une voie à courant continu non mis à la terre qui comprend des rails qui s'étendent par-dessus une base, ledit procédé étant **caractérisé par**
prévoir un conducteur électrique (3, 4) à proximité desdits rails, ledit conducteur s'étendant de manière sensiblement parallèle auxdits rails (1) et n'étant pas relié électriquement à ceux-ci ; et
mettre à la terre dudit conducteur (3, 4) en prévoyant une connexion électrique (5) entre ledit conducteur électrique et la terre.

2. Voie à courant continu non mis à la terre muni d'une sécurité de contact améliorée qui comprend des rails (1) qui s'étendent par-dessus une base,
**caractérisé par**
un conducteur électrique (3, 4) à proximité desdits rails, ledit conducteur (3) s'étendant de manière sensiblement parallèle auxdits rails (1) et n'étant pas électriquement relié à ceux-ci ; et
une connexion électrique (5) entre ledit conducteur électrique et la terre.

3. Voie à courant continu non mis à la terre selon la revendication 2, dans lequel ladite connexion électrique (5) comprend une résistance.

4. Voie à courant continu non mis à la terre selon la revendication 2, dans lequel ladite connexion électrique (5) comprend un condensateur.

5. Voie à courant continu non mis à la terre selon la revendication 2, dans lequel ladite connexion électrique (5) comprend un réseau résonant.

6. Voie à courant continu non mis à la terre selon l'une quelconque des revendications 2 à 5, dans lequel ledit conducteur (3) est placé entre lesdits rails (1).

7. Voie à courant continu non mis à la terre selon l'une quelconque des revendications 2 à 5, dans lequel ledit conducteur (4) est placé près du rail, et est plus particulièrement intégré à ladite base.

8. Voie à courant continu non mis à la terre selon la revendication 6, dans lequel ledit conducteur (3) est un rail.

9. Voie à courant continu non mis à la terre selon la revendication 6 ou 7, dans lequel ledit conducteur (4) est un câble.
